# EUROPÄISCHE PATENTSCHRIFT

(11) **EP 0 816 137 B1**
(45) Veröffentlichungstag und Bekanntmachung des Hinweises auf die Patenterteilung: **14.05.2003**
(21) Anmeldenummer: 97109927.0
(22) Anmeldetag: 18.06.1997
(51) Int. Cl.: B60C 23/04

(54) **Schutzgehäuse für einen Elektronikbaustein**
Protective housing for electronic construction unit
Boîtier de protection pour composants électroniques

(30) Priorität: 01.07.1996 DE 19626144
(43) Veröffentlichungstag der Anmeldung: 07.01.1998
(73) Patentinhaber: Continental Aktiengesellschaft, 30165 Hannover (DE)
(72) Erfinder: Albinski, Christian, 30177 Hannover (DE)

(56) Entgegenhaltungen:
- EP-A- 0 751 017
- FR-A- 2 661 373
- US-A- 4 507 956
- US-A- 5 637 926

## Beschreibung

Die Erfindung betrifft ein Schutzgehäuse für einen in das Tiefbett einer Fahrzeugfelge zu integrierenden Elektronikbaustein.

Die amerikanische Patentschrift 5,637,926 beschreibt eine Elektronik-Anordnung, dessen Transmitter-Elektronik-Baustein innerhalb des Reifens auf der relativ planen Außenfläche des Felgenbetts mit Hilfe eines um die Felge gespannten Gürtels befestigt ist.

Diese Befestigungsart hat sich als wenig zuverlässig erwiesen, denn die innerhalb des Reifens auftretenden Temperaturschwankungen führen zu unterschiedlichen Ausdehnungen von Felge und Befestigungsgürtel. Bei elastischem Gürtelmaterial besteht die Gefahr, den am schnell-rotierenden Rad auftretenden Fliehkräften nicht standhalten zu können.

Das Elektronik-Gehäuse selbst findet auf der relativ planen Fläche des Tiefbetts kaum seitlichen Halt.

Die vordere und hintere Hohlkehle des steil aufragenden Gehäuses und die großen Flanken des rechteckigen GehäuseDeckels stellen Angriffsmöglichkeiten für Reifen-Montierwerkzeuge dar. Eine Beschädigung des empfindlichen Elektronik-Bausteins ist bei der Reifen-Montage nicht auszuschließen.

Die dieser Erfindung zugrundeliegende Aufgabe besteht in einer in jeder Hinsicht optimalen Integration eines solchen Elektronikbausteins (Elektronikmoduls) in das Tiefbett einer Fahrzeugfelge. Das Schutzgehäuse soll möglichst flachbauend sein (tiefer Schwerpunkt) und trotzdem ein hinreichend großes Volumen zur Unterbringung der Elektronik nebst Batterie haben.

Diese Aufgabe wird dadurch gelöst, daß die (möglichst) äußersten, das Schutzgehäuse des Elektronikbausteins in y-Richtung begrenzenden Flächen an die Flanke bzw, den Grund des Tiefbetts der Fahrzeugfelge zur Anlage gebracht sind, wobei der Winkel β zwischen den beiden hinteren Flächen der Unterseite des Schutzgehäuses stets größer als der Winkel zwischen Flanke und Grund des Tiefbetts ist. Anstelle des Tiefbettgrundes kann auch die zweite Tiefbettflanke als Anlage fungieren. Durch diese spezielle geometrische Gestaltung der Außenkontur des Elektronikbaustein-Gehäuses und durch das Anliegen des Moduls am Tiefbettgrund bei gleichzeitigem Minimieren des Abstandes zwischen Modul-Gehäuse und Flanken des Tiefbetts wird ein sonst zu befürchtendes Unterhaken mit Montiereisen, Abdrückschaufel usw. verhindert. Falls es Felgentypen geben sollte, die die Funktion der Gehäusegeometrie einschränken oder behindern sollten, dann höchstens jedoch nur sehr wenige.

Durch die Wahl des Winkels β und der Längen der diesen winkel bildenden Schenkel A und B wird erreicht, daß die auf der Seite der Tiefbettflanke befindlichen Anlagepunkte in z-Richtung möglichst hoch liegen.
Dadurch wird die Gefahr des Abhebens des Moduls von der Tiefbettkontur durch um diese Anlagepunkte wirkende und von äußeren Kräften hervorgerufene Momente reduziert.

Das Minimum des Radius R und des Winkels B werden, da sich das Modul in die Tiefbetten verschiedener Felgen einpassen lassen muß, von den in der ETRO (The European Tyre and Rim Technical Organisation) angegebenen minimalen bzw. maximalen Werten für das Gestalten von Felgentiefbetten festgelegt. Der Radius R ist vorzugsweise ≥ 10 mm.

Wenn die Modulunterseite aus zwei oder mehr einander zugeneigten, die Schenkel A' und B' bildenden Flächen (α < 180°) besteht, wird ein Anpassen an verschiedene Felgendurchmesser ermöglicht.

Die Moduloberseite ist vorzugsweise so gestaltet, daß der sich ergebende Winkel γ zwischen einem Maximum der Teilflächen der Moduloberseite und einem Lot, welches durch den äußersten Punkt des Moduls (in y-Richtung) auf der Seite der Tiefbettflanke gefällt wird, stets größer oder gleich 90° und kleiner oder gleich 180° ist (90° ≤ γ ≤ 180°).
Dies hat zur Folge, daß die Kraftkomponenten der von außen angreifenden Kraft, die ein Auswandern des Moduls aus dem Tiefbett oder ein Abheben des Moduls von der Tiefbettkontur zur Folge hätten, ein Minimum annehmen.
Die Gefahr einer Beschädigung ist somit insgesamt verringert.

Eine weitere Verbesserung der Ausgestaltung sieht vor, daß ein Maximum der das Modul (in x-Richtung) seitlich begrenzenden Teilflächen so geneigt ist (Winkel δ), daß eine von außen wirkende und hauptsächlich aus der y-z-Ebene kommende Kraft einen möglichst spitzen (kleinen) Winkel φ mit diesen Flächen bildet. Vorzugsweise gilt: 45° ≥ δ ≥ -45°.
Daraus resultiert, daß der Normalkraftanteil ein Minimum annimmt.

Verbleibende seitlich (in Umfangsrichtung bzw. in x-Richtung) wirkende Kräfte bzw. Kräfte, die ein Auswandern des Moduls aus dem Tiefbett oder ein Abheben des Moduls von der Tiefbettkontur zur Folge hätten, werden von einem Befestigungssystem aufgenommen.

Zu diesem Zweck ist das Befestigungssystem des Schutzgehäuses so ausgelegt, daß das Modul bei überlast nicht beschädigt werden kann und die Dichtheit des Komplettrades bewahrt bleibt.

Insgesamt kann durch das erfindungsgemäße Gehäuse ein Elektronikbaustein optimal in das Tiefbett von Kraftfahrzeugfelgen integriert werden. Durch seine geometrische Gestaltung der Außenkontur verringert sich die Gefahr, durch äußere Krafteinwirkung beschädigt oder aus dem Tiefbett ausgehoben zu werden.

Zur Verdeutlichung der erfinderischen Idee sollen die beigefügten Zeichnungen dienen.

Es zeigen:
die Figuren 1a, 1b und 1c die Vorder-, Seitenansicht, bzw. die Draufsicht des erfindungsgemäßen Schutzgehäuses (in x-, y- und z-Richtung);
die Figuren 2a, 2b, 2c und 2d Prinzipdarstellungen des Schutzgehäuses unter Einbeziehung der erforderlichen Vorspannkraft;
die Fig. 3 einen Querschnitt durch ein erfindungsgemäßes Schutzgehäuse in Bezug zur Felge;
die Fig. 4 veranschaulicht die Wirkung des Winkels φ auf die Kraftkomponenten der von außen angreifenden Kraft (in Bezug auf die seitliche Begrenzung des Moduls);
die Fig. 5 die Anpassung der Unterseite des erfindungsgemäßen Schutzgehäuses an verschiedene Felgendurchmesser (alternativ: -größen);
die Fig. 6 die Anlagepunkte des im Querschnitt (Fig. 6a) und Aufriß (Fig. 6b) dargestellten erfindungsgemäßen Schutzgehäuses und die an den Anlagepunkten wirkende Kraft;
die Fig. 7 den Querschnitt eines Ausführungsmusters des Schutzgehäuses.

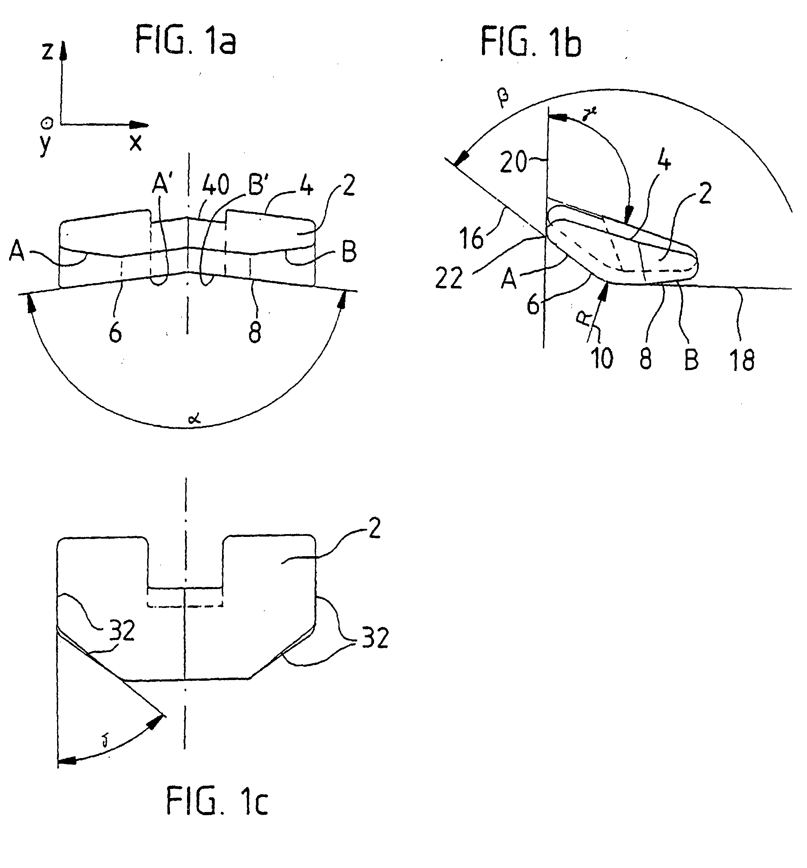

Wie aus dem in Fig. 1b dargestellten Querschnitt hervorgeht, weist das erfindungsgemäße Schutzgehäuse 2 im wesentlichen eine dreiseitige Oberfläche 4, 6 und 8 auf; die Oberseite 4 und die an der Unterseite befindlichen Flächen 6 und 8. Die an der Unterseite befindlichen Flächen 6 und 8 bilden miteinander den Winkel β. Um ein Unterhaken beim Montieren zu verhindern, soll der Winkel β stets größer als der zwischen Flanke 16 und Grund des Tiefbetts 18 sein.
Der Radius R, 10 gibt den Übergang zwischen (äußerer) Flanke 16 und dem Grund des Tiefbetts 18 der Felge 12 an. Das Minimum des Radius R, 10 und des Winkels β werden, da sich das Modul 2 in den Tiefbetten verschiedener Felgen 12 einpassen lassen muß, von den in der E.T.R.T.O. (The European Tyre and Rim Technical Organisation) angegebenen minimalen bzw. maximalen Werten für das Gestalten von Felgentiefbetten festgelegt. Der Winkel β ist zwar nicht explizit in der E.T.R.T.O. ausgewiesen, er ergibt sich aber durch andere angegebene Maße.
An seiner Oberseite weist das Schutzgehäuse 2 eine Aussparung 40 zur Aufnahme eines Befestigungsbügels auf (Fig. 1a).

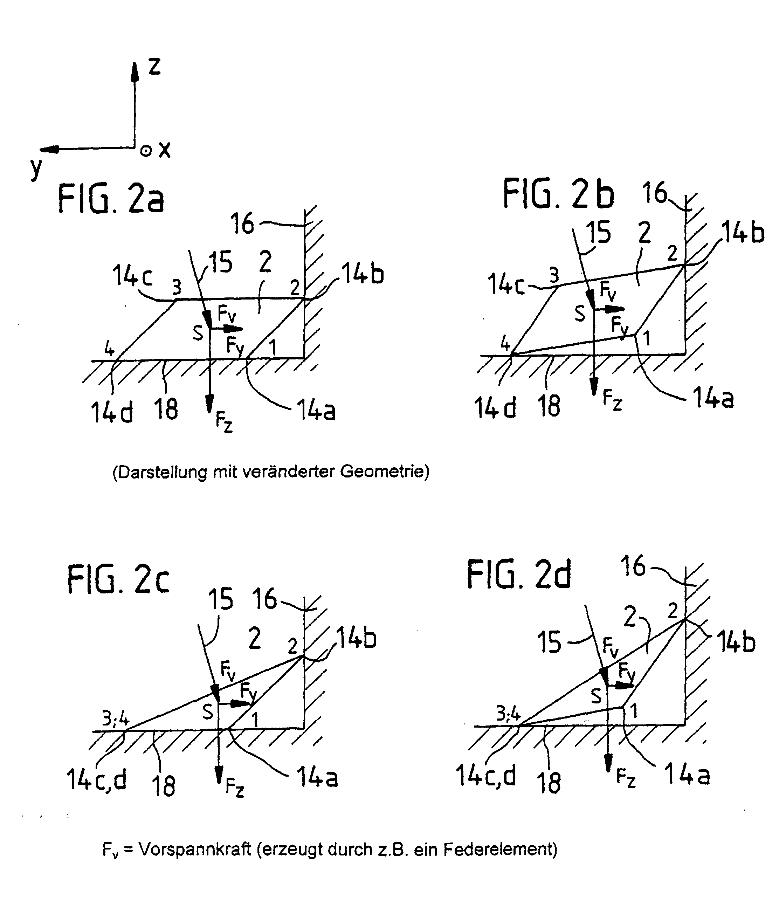

Aus den in den Figuren 2a und 2b, bzw. 2c und 2d dargestellten schematisierten Querschnitten des Schutzgehäuses 2 ist ersichtlich, daß durch ein Zur-Anlage-bringen mit Hilfe einer Vorspannkraft 15 der möglichst äußersten, das Modul in y-Richtung begrenzenden Kanten 14b und 14d, bzw. der Kanten 14b und 14c,d an die Flanke 16 bzw. den Grund 18 des Tiefbettes ein Unterhaken (mit Montiereisen, Abdrückschaufel usw.) verhindert wird.

Wie weiterhin aus der Fig. 1b ersichtlich, ist die Moduloberseite 4 so gestaltet, daß der sich ergebende Winkel γ zwischen einem Maximum der Teilflächen der Moduloberseite 4 und einem Lot 20, welches durch den äußersten Punkt 22 des Moduls 2 (in y-Richtung) auf der Seite der Tiefbettflanke 16 gefällt wird, stets größer oder gleich 90° und kleiner oder gleich 180° ist (90° ≤ γ ≤ 180°).

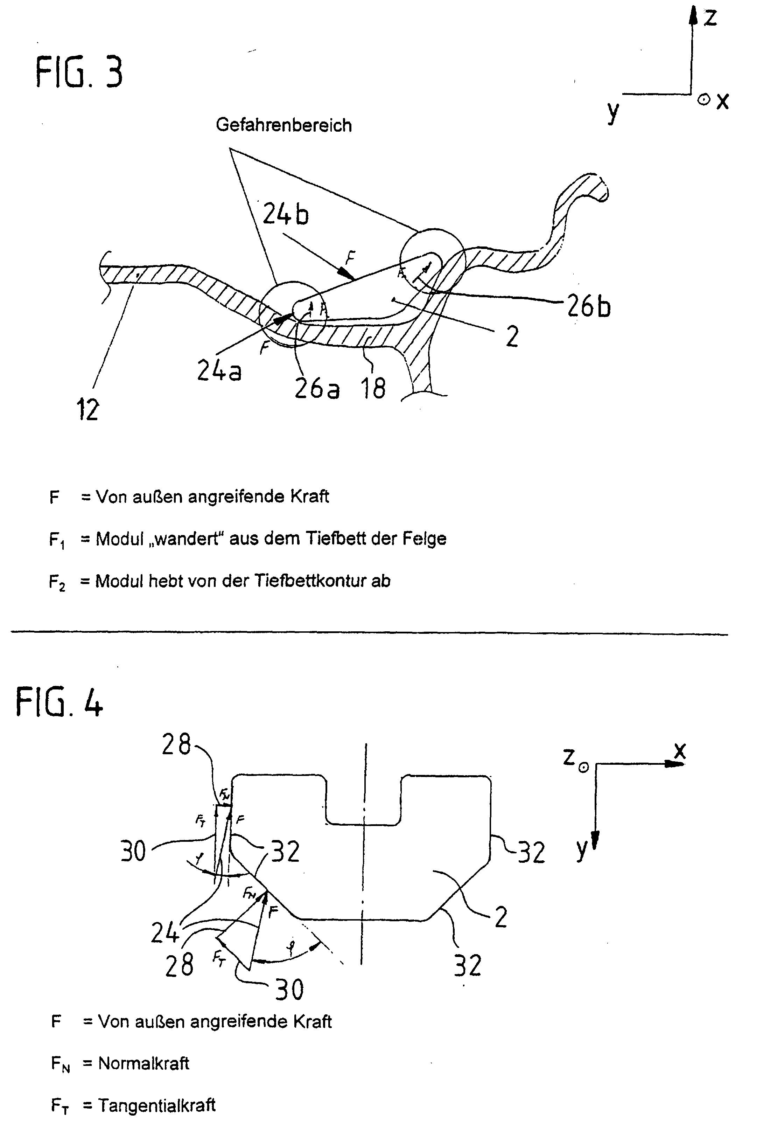

Dies hat zur Folge, daß die Kraftkomponenten 26a, 26b der von außen angreifenden Kraft 24a, 24b, die ein Auswandern des Moduls 2 aus dem Tiefbett oder ein Abheben des Moduls 2 von der Tiefbettkontur zur Folge hätten, ein Minimum annehmen (siehe Fig. 3).

Die von außen an das Modul 2 angreifende Kraft F, 24a, 24b läßt sich in die Normalkraft F_{N}, 28 und die Tangentialkraft F_{T}, 30 zerlegen.

Die Fig, 4 verdeutlicht diese auf die Seitenflächen 32 des Moduls 2 einwirkenden Kräfte 24, 28, 30. Dabei ist ein Maximum der das Modul 2 seitlich (in x-Richtung) begrenzenden Teilflächen 32 so geneigt, (Winkel δ; siehe Draufsicht, Fig. 1c), daß eine von außen wirkende und hauptsächlich aus der y-z-Ebene kommende Kraft 24, einen möglichst spitzen (kleinen) Winkel φ mit diesen Flächen 32 bildet. Daraus resultiert, daß der Normalkraftanteil 28 ein Minimum annimmt.

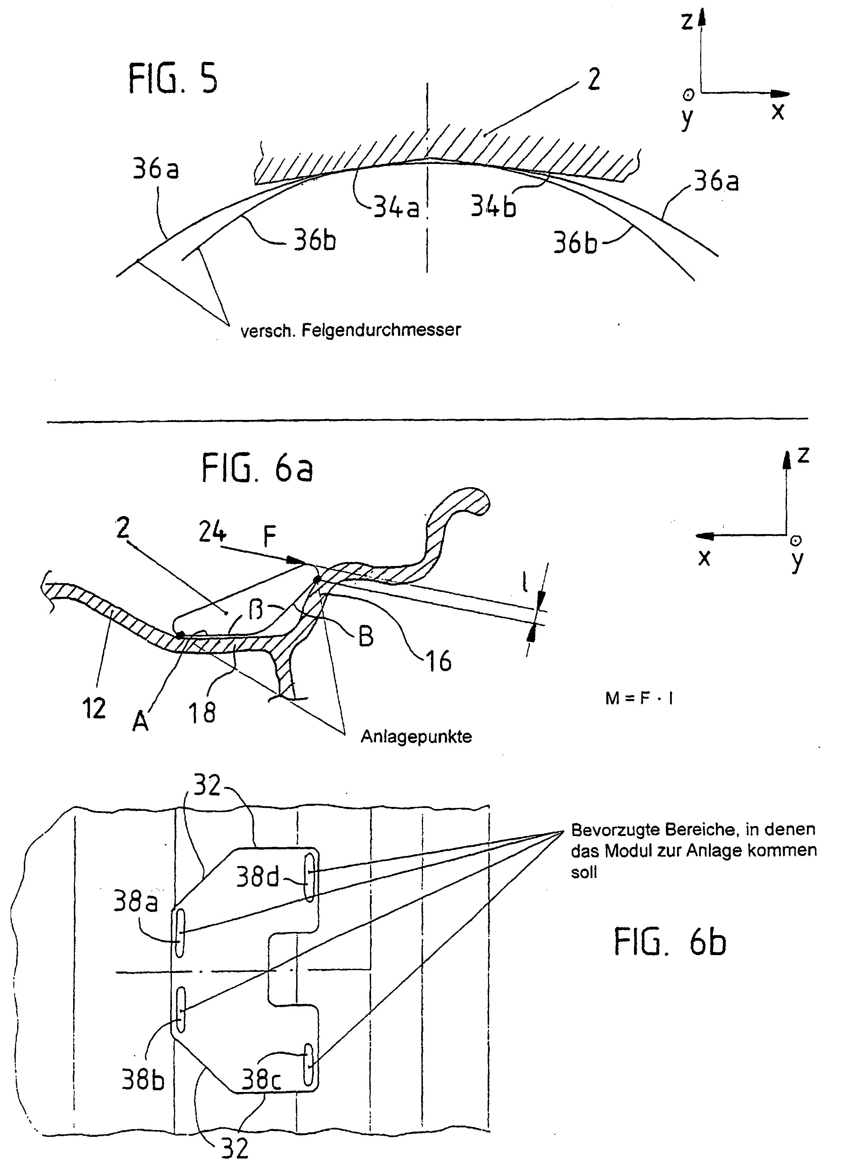

In x-Richtung (tangetial zum Tiefbett der Felge 12) besteht die Modulunterseite 6, 8 aus zwei oder mehr einander zugeneigten Flächen 34a, 34b (Schenkel A' und B' des Winkels α < 180°), die ein Anpassen an verschiedene Felgendurchmesser ermöglichen (Fig. 5).

Die Fig. 6 zeigt, daß durch die Wahl des Winkels β und der Längen der diesen Winkel bildenden Schenkel A und B erreicht wird, daß die Anlagepunkte 38c und 38d auf der Seite der Tiefbettflanke 16 (in z-Richtung) möglichst hoch liegen, wodurch die Gefahr des Abhebens des Moduls 2 von der Tiefbettkontur 16, 18 durch um diese Anlagepunkte 38c und 38d wirkende und von äußeren Kräften 24a, 24b hervorgerufene Momente reduziert wird.

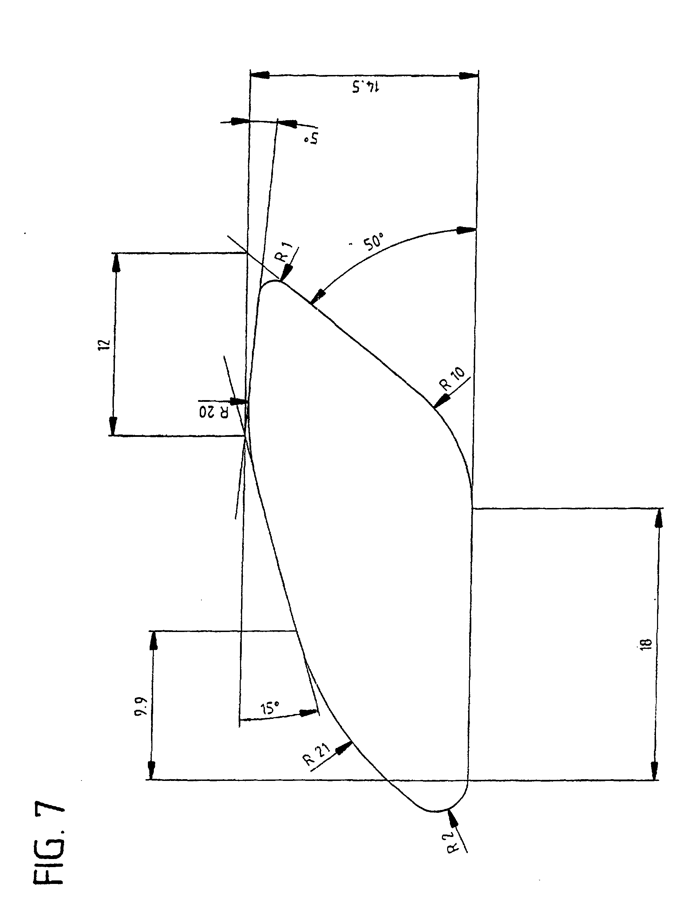

Die Fig. 7 zeigt zwar eine vollständige "Vermaßung" des im Querschnitt dargestellten Schutzgehäuses 2. Die vorliegende Erfindung ist aber keinesfalls auf die bezeichnete Dimensionierung beschränkt.

### Bezugszeichenliste

- 2: Schutzgehäuse (Modul)
- 4: Oberseite des Schutzgehäuses
- 6, 8: Flächen der Gehäuseunterseite
- 10: Radius R zwischen Flanke und Tiefbett der Felge
- 12: (Fahrzeug-)Felge
- 14a, 14b, 14c, 14d: äußerste Kanten des Schutzgehäuses
- 15: Vorspannkraft
- 16: (radäußere) Flanke des Felgenbetts
- 18: Grund des Tiefbetts
- 20: Lot
- 22: äußerster Punkt des Schutzgehäuses (des Moduls) in y-Richtung auf der Seite der Tiefbettflanke 16
- 24a, 24b: von außen an das Schutzgehäuse angreifende Kraft
- 26a, 26b: resultierende Kraftkomponenten
- 28: Normalkraft F_{N}
- 30: Tangentialkraft F_{T}
- 32: Seitenfläche des Schutzgehäuses (des Moduls) [die das Modul seitlich (in x-Richtung) begrenzenden Teilflächen]
- 34a, 34b: in x-Richtung zueinander geneigte Flächen der Gehäuseunterseite
- 36a, 36b: verschiedene Felgendurchmesser
- 38a, 38b, 38c, 38d: bevorzugte Anlagepunkte (des Schutzgehäuses an die Felge)
- 40: Aussparung

## Patentansprüche

1. Schutzgehäuse (2) für einen in das aus Tiefbettgrund (18) und innerer und äußerer Tiefbettflanke (16) bestehende Tiefbett einer Fahrzeugfelge (12) anbringbaren Elektronikbaustein,
wobei die mehrseitige Oberfläche des Schutzgehäuses (2) eine Oberseite und eine aus mindestens zwei Flächen (6, 8) bestehende Unterseite aufweist, und
wobei die mindestens zwei Flächen (6, 8) der Unterseite dem Tiefbett (16) zugewandt und so gestaltet sind,
dass sich das Schutzgehäuse (2) in den Richtungen der mindestens zwei Flächen (6, 8) eng an die jeweilige Felgenform anschmiegt,
**dadurch gekennzeichnet,**
**dass** die äußersten, das Schutzgehäuse (2) des Elektronikbausteins in y-Richtung begrenzenden Flächen bzw. Teilflächen (6, 8) an die Flanke (16) bzw. den Grund (18) des Tiefbetts zur Anlage gebracht sind,
wobei der Winkel β zwischen den an der Unterseite befindlichen Flächen (6) und (8) kleiner/gleich 180° und größer/gleich 90° (180° ≥ β ≥ 90°) und stets größer als der Winkel zwischen Flanke (16) und Grund (18) des Tiefbetts ist,
so dass sich die Anlagepunkte am oder nahe am Außenumfang des Schutzgehäuses (2) befinden.

2. Schutzgehäuse nach Anspruch 1,
**dadurch gekennzeichnet,**
**dass** der Winkel β und die Länge des diesen Winkel bildenden Schenkels A und B so gewählt sind, dass die Anlagepunkte (38c und 38d) auf der Seite der Tiefbettflanke (16) in z-Richtung hoch liegen.

3. Schutzgehäuse nach Anspruch 1 oder 2,
**dadurch gekennzeichnet,**
**dass** das Minimum des Radius R (10) von dem in der E.T.R.T.O. (The European Tyre and Rim Technical Organisation) zum Anmeldezeitpunkt angegebenen minimalen Wert für
das Gestalten von Felgentiefbetten (18) festgelegt ist.

4. Schutzgehäuse nach einem der Ansprüche 1 bis 3,
**dadurch gekennzeichnet,**
**dass** die auf der Unterseite des Schutzgehäuses (2) befindlichen Flächen (6, 8) die Schenkel A' und B' eines Winkels α bilden,
wobei der Winkel α stets kleiner als 180° (α < 180°) ist.

5. Schutzgehäuse nach einem der Ansprüche 1 bis 4,
**dadurch gekennzeichnet,**
**dass** die Moduloberseite (4) so gestaltet ist, dass der sich ergebende Winkel γ zwischen einem Maximum der Teilflächen der Moduloberseite (4) und einem Lot (20), welches durch den äußersten Punkt (22) des Moduls (2) (in y-Richtung) auf der Seite der Tiefbettflanke (16) gefällt wird, stets größer oder gleich 90° und kleiner oder gleich 180° ist (90° ≤ γ ≤ 180°).

6. Schutzgehäuse nach einem der Ansprüche 1 bis 5,
**dadurch gekennzeichnet,**
**dass** die Richtungen der das Schutzgehäuse (2) seitlich, d. h. in x-Richtung, begrenzenden Teilflächen (32), bzw. die Richtungen der an das jeweilige Maximum der an die Teilflächen (32) gelegten Tangenten gegenüber der x-Richtung um den Winkel δ so geneigt sind,
**dass** eine aus der y-z-Richtung von außen angreifende Kraft (24) jeweils einen spitzen Winkel φ mit diesen Flächen (32) bildet.

7. Schutzgehäuse nach einem der vorhergehenden Ansprüche,
**dadurch gekennzeichnet,**
**dass** das Schutzgehäuse (2) an seiner Oberseite eine Aussparung (40) zur Aufnahme eines Befestigungsbügels aufweist.

## Claims

1. Protective housing (2) for an electronic modular component, which is mountable in the drop base of a vehicle rim (12), which drop base comprises a drop-base bottom (18) and an inner and outer drop-base flank (16), the polygonal surface of the protective housing (2) having an upper side and an underside, which comprises at least two faces (6, 8), and the at least two faces (6, 8) of the underside facing the drop base (16) and being so configured that the protective housing (2) conforms closely to the respective rim shape when viewed with respect to the directions of the at least two faces (6, 8), **characterised in that** the outermost faces or partial faces (6, 8) respectively, which define the protective housing (2) of the electronic modular component when viewed with respect to the y-direction, are caused to abut against the flank (16) or respectively the bottom (18) of the drop base, the angle β between the faces (6) and (8), which are situated on the underside, being less than/equal to 180° and greater than/equal to 90° (180° ≥ β ≥ 90°) and always greater than the angle between flank (16) and bottom (18) of the drop base, so that the contact points are situated on the outer circumference of the protective housing (2) or close to said circumference.

2. Protective housing according to claim 1, **characterised in that** the angle β and the length of the legs A and B, which form this angle, are so selected that the contact points (38c and 38d) are situated in an elevated position on the side of the drop-base flank (16) when viewed with respect to the z-direction.

3. Protective housing according to claim 1 or 2, **characterised in that** the minimum of the radius R (10) is stipulated by the minimum value for configuring rim drop bases (18) quoted by the E.T.R.T.O. (The European Tyre and Rim Technical Organisation) on the application date.

4. Protective housing according to one of claims 1 to 3, **characterised in that** the faces (6, 8), situated on the underside of the protective housing (2), form the legs A' and B' of an angle α, the angle α always being less than 180° (α < 180°).

5. Protective housing according to one of claims 1 to 4, **characterised in that** the upper side (4) of the module is so configured that the resultant angle γ between a maximum of the partial faces of the upper side (4) of the module and a perpendicular (20), which is dropped downwardly through the outermost point (22) of the module (2) (when viewed with respect to the y-direction) on the side of the drop-base flank (16), is always greater than or equal to 90° and less than or equal to 180° (90° ≤ γ ≤ 180°).

6. Protective housing according to one of claims 1 to 5, **characterised in that** the directions of the partial faces (32), which define the protective housing (2) laterally, i.e. when viewed with respect to the x-direction, or respectively the directions of the tangents, which abut against the respective maximum of the partial faces (32), are inclined relative to the x-direction by the angle δ so that a force (24), which attacks from externally from the y-z-direction, respectively forms an acute angle φ with these faces (32).

7. Protective housing according to one of the preceding claims, **characterised in that** the protective housing (2) has, on its upper side, a recess (40) for the accommodation of a mounting clamp.

## Revendications

1. Boîtier de protection (2) pour un composant électronique pouvant être monté dans la base creuse d'une jante de véhicule (12), laquelle base creuse se compose d'un fond (18) de la base creuse et d'un flanc intérieur et extérieur (16) de la base creuse,
où la surface à plusieurs côtés du boîtier de protection (2) comprend un dessus et un dessous se composant d'au moins deux surfaces (6, 8), et
où les au moins deux surfaces (6, 8) du dessous sont tournées vers la base creuse (16) et sont configurées de façon telle, que le boîtier de protection (2) s'adapte étroitement à la forme respective de la jante dans les directions des au moins deux surfaces (6, 8),
**caractérisé**
**en ce que** les surfaces ou les surfaces partielles (6, 8) se trouvant le plus à l'extérieur et limitant le boîtier de protection (2) du composant électronique dans la direction y sont placées en appui sur le flanc (16), respectivement sur le fond (18) de la base creuse,
où l'angle β formé entre les surfaces (6) et (8) se trouvant sur le dessous est inférieur ou égal à 180° et supérieur ou égal à 90° (180° ≥ β ≥ 90°) et toujours supérieur à l'angle formé entre le flanc (16) et le fond (18) de la base creuse,
de sorte que les points d'appui se trouvent sur ou à proximité de la périphérie extérieure du boîtier de protection (2).

2. Boîtier de protection selon la revendication 1, **caractérisé en ce que** l'angle β et la longueur des côtés A et B formant cet angle sont choisis de façon telle, que les points d'appui (38c et 38d) soient placés en hauteur sur le côté du flanc (16) de la base creuse, dans la direction z.

3. Boîtier de protection selon la revendication 1 ou 2, **caractérisé en ce que** le minimum du rayon R (10) est fixé par la valeur minimale utilisée pour la conception de bases creuses (18) de jantes, cette valeur étant indiquée, à la date de la demande, par "l'organisation Technique Européenne concernant les pneumatiques et les jantes" (*'The European Tyre and Rim Technical Organisation - E.T.R.T.O').*

4. Boîtier de protection selon l'une quelconque des revendications 1 à 3, **caractérisé en ce que** les surfaces (6, 8) se trouvant sur le dessous du boîtier de protection (2) forment les côtés A' et B' d'un angle α, où l'angle α est toujours inférieur à 180° (α < 180°).

5. Boîtier de protection selon l'une quelconque des revendications 1 à 4, **caractérisé en ce que** le dessus (4) du module est configuré de façon telle, que l'angle γ formé entre un maximum des surfaces partielles du dessus (4) du module, et une perpendiculaire (20) qui est abaissée en passant par le point (22) placé le plus à l'extérieur du module (2) (dans la direction y), sur le côté du flanc (16) de la base creuse, soit toujours supérieur ou égal à 90°C et inférieur ou égal à 180° (90° ≤ γ ≤ 180°).

6. Boîtier de protection selon l'une quelconque des revendications 1 à 5, **caractérisé en ce que** les directions des surfaces partielles (32) limitant latéralement le boîtier de protection (2), c'est-à-dire dans la direction x, ou les directions des tangentes appliquées sur les surfaces partielles (32), suivant le maximum respectif, sont inclinées suivant l'angle δ par rapport à la direction x, de façon telle qu'une force (24) s'appliquant de l'extérieur, à partir de la direction y-z, forme à chaque fois un angle aigu φ avec ces surfaces (32).

7. Boîtier de protection selon l'une quelconque des revendications précédentes, **caractérisé en ce que** le boîtier de protection (2) comprend, sur son dessus, un évidement (40) servant à loger un étrier de fixation.
